# EUROPÄISCHE PATENTSCHRIFT

(11) **EP 1 308 377 B1**
(45) Veröffentlichungstag und Bekanntmachung des Hinweises auf die Patenterteilung: **10.11.2004**
(21) Anmeldenummer: 02020940.9
(22) Anmeldetag: 19.09.2002
(51) Int. Cl.: B62D 55/00

(54) **Kettenfahrzeug**
Tracked vehicle
Véhicule à chenilles

(30) Priorität: 30.10.2001 DE 10154650
(43) Veröffentlichungstag der Anmeldung: 07.05.2003
(73) Patentinhaber: Kässbohrer Geländefahrzeug AG, 88471 Laupheim (DE)
(72) Erfinder: Kanzler, Helmut, 89269 Vöhringen (DE); Kuhn, Michael, 88480 Achstetten (DE)
(74) Vertreter: Patentanwälte Ruff, Wilhelm, Beier, Dauster & Partner

(56) Entgegenhaltungen:
- EP-A- 0 937 614
- US-A- 4 754 824

## Beschreibung

Die Erfindung betrifft ein Kettenfahrzeug mit einem Antriebssystem, das Fahr-, Brems-, Fahrtrichtungsänderungs- und Lenkfunktionen abhängig von entsprechenden Steuerbefehlen einer elektronischen Steuereinheit durchführt, wobei das Antriebssystem für Lenkfunktionen durch elektronische Umwandlung von Steuerbewegungen einer manuell bedienbaren Steuerhandhabe mittels der elektronischen Steuereinheit ansteuerbar ist, und wobei der Steuerhandhabe ein mechanisch wirksames Koppelglied zugeordnet ist, das bei einem Ausfall der elektronischen Steuereinheit durch ein Zwangsstellglied zuschaltbar ist und die Steuerverbindung der Steuerhandhabe zu dem Antriebssystem und/oder dem separaten Bremssystem herstellt.

Ein derartiges Kettenfahrzeug ist aus der US-A-4,754,824 bekannt. Das Kettenfahrzeug weist ein Antriebssystem auf, das verschiedene Fahr- und Lenkfunktionen abhängig von entsprechenden Steuerbefehlen einer elektronischen Steuereinheit ausführt. Um eine entsprechende Lenkfunktion erzielen zu können, ist das Antriebssystem durch elektronische Umwandlungen von Steuerbewegungen einer manuell bedienbaren Steuerhandhabe mittels der elektronischen Steuereinheit ansteuerbar. Der Steuerhandhabe ist ein mechanisch wirksames Koppelglied zugeordnet, das zwangsläufig zugeschaltet wird, sobald die elektronische Steuereinheit ausfällt. Das Koppelglied stellt für diesen Fall die Steuerverbindung der Steuerhandhabe zu dem Antriebssystem bzw. dem Bremssystem her.

Aus der EP-A-0 937 614 ist ein Verfahren und eine Vorrichtung zur Steuerung einer Bremsanlage für ein Kraftfahrzeug bekannt, wobei die Betätigung des Bremspedals erfasst wird. Im Fehlerfall wird eine hydraulische Verbindung zwischen Bremspedal und Vorderachsbremse freigeschaltet, während für Hinterachsradbremsen in Abhängigkeit vom Fehlerzustand eine elektronische Regelung aktiv bleiben kann.

Ein weiteres Kettenfahrzeug für den Einsatz auf Schneepisten ist durch entsprechende Pistenfahrzeuge der Anmelderin allgemein bekannt. Ein solches bekanntes Kettenfahrzeug ist mit einer linken sowie mit einer rechten Fahrwerkseite versehen, die jeweils einen Kettentrieb aufweisen. Jeder Kettentrieb wird durch eine Antriebshydraulik angetrieben, die für jede Fahrwerksseite jeweils eine Hydraulikpumpeinheit aufweist. Die beiden Hydraulikpumpeinheiten sind unter Zwischenschaltung eines Verteilergetriebes durch einen Verbrennungsmotor angetrieben, der als Diesel- oder als Ottomotor ausgeführt sein kann. Jedem Kettentrieb ist wenigstens ein Antriebsrad zugeordnet, das jeweils durch einen Hydromotor angetrieben wird, der Teil der Antriebshydraulik ist. Lenkvorgänge, Beschleunigungs- und Bremsvorgänge sowie Fahrtrichtungsänderungsvorgänge aufgrund eines Umschaltens von Vorwärts- auf Rückfahrtsfahrt erfolgen durch entsprechend unterschiedliche Ansteuerung der Hydromotoren für die Kettentriebe auf beiden Fahrzeugseiten. Durch unterschiedliche Ansteuerung der links- und rechtsseitig angeordneten Kettentriebe sind Lenkbewegungen erzielbar. Die Ansteuerung der Hydromotoren erfolgt über entsprechend hydraulische Steuermittel, die wiederum durch eine elektronische zentrale Steuereinheit angesteuert werden.

Aufgabe der Erfindung ist es, ein Kettenfahrzeug der eingangs genannten Art zu schaffen, das bei einem Ausfall oder einer Fehlfunktion der elektronischen Steuereinheit dennoch eine Steuerung des Kettenfahrzeugs ermöglicht.

Diese Aufgabe wird dadurch gelöst, dass als Teil des Bremssystems jeder Fahrwerksseite eine von der Antriebshydraulik unabhängige Bremseinrichtung zugeordnet ist, die über wenigstens einen separaten Energieversorgungskreis gespeist ist, dass die Steuerhandhabe mechanisch mit wenigstens einem Steuerglied des Energieversorgungskreises verbunden ist, das abhängig von einem Ausfall der elektronischen Steuereinheit mittels eines stromlos wirksamen Zwangsstellgliedes zuschaltbar ist und abhängig von entsprechenden Lenkbewegungen der Steuerhandhabe die Bremseinrichtung beider Fahrwerksseiten ansteuert, und dass als Energieversorgungskreis ein Hydraulikkreis vorgesehen ist, der durch eine Pumpeinrichtung gespeist ist, die derart mechanisch mit wenigstens einer Fahrwerksseite in Verbindung steht, dass durch die Ausrollbewegung des Kettenfahrzeugs die Pumpeinrichtung mit einem ausreichenden Speisedruck versorgt wird.

Durch die erfindungsgemäße Lösung ist gewährleistet, dass auch bei einem Ausfall oder einem Abschalten oder einer Fehlfunktion der Elektronik noch eine Lenkfunktion des Kettenfahrzeugs zumindest so lange geboten ist, bis das Kettenfahrzeug zum Stillstand gekommen ist. Durch diesen sicherheitstechnisch relevanten Aspekt ist eine Straßenzulassung für das Kettenfahrzeug trotz rein elektronischer Fahrtrichtungssteuerung ermöglicht.

Durch die mechanische Verbindung der wenigstens einen Pumpeinrichtung mit beim Ausrollen des Kettenfahrzeugs entsprechend rotierenden Teilen wird die Pumpeinrichtung mitgeschleppt, wodurch bei geeigneter Abstimmung der wenigstens einen Pumpeinrichtung auf das Bremssystem der gewünschte Speisedruck aufrecht erhalten werden kann.

In Ausgestaltung der Erfindung ist als Steuerglied ein Druckregelventil vorgesehen, das proportional zu den Lenkbewegungen der Steuerhandhabe eine Ansteuerung beider Hydraulikkreise und der zugeordneten Bremseinrichtungen vornimmt. Dabei wird bei Geradeausfahrt der Druck in beiden Hydraulikkreisen gleich gehalten. Bei einer entsprechenden Lenkbewegung wird der Druck in jeweils einem Hydraulikkreis gegenüber dem anderen Hydraulikkreis abgesenkt, so dass die gewünschte Bremseinrichtung eine entsprechende Bremsfunktion durchführen kann, wodurch die beabsichtigte Geschwindigkeitsreduzierung des jeweiligen Kettentriebes bewirkt wird.

In weiterer Ausgestaltung der Erfindung weist jede Bremseinrichtung eine mechanisch wirksame Bremse, insbesondere eine Lamellenbremse, auf, die auf ein Kettenrad der jeweiligen Fahrwerksseite einwirkt. Dies ist eine besondere funktionssichere Ausgestaltung, die die Übertragung hoher Bremskräfte ermöglicht.

In weiterer Ausgestaltung der Erfindung ist eine doppelt wirkende Lamellenbremse vorgesehen. Diese Lamellenbremse ist vorzugsweise mit zwei Bremskolben oder Bremsscheiben versehen, die unabhängig voneinander ansteuerbar sind und jeweils auf ein entsprechendes Lamellenpaket einwirken.

In weiterer Ausgestaltung der Erfindung ist als Funktionsüberwachungsmittel wenigstens ein Drucksensor in dem wenigstens einen Energieversorgungskreis der wenigstens einen Bremseinrichtung integriert, der an die elektronische Steuereinheit angeschlossen ist. Als Energieversorgungsteil ist bei dieser Ausgestaltung ein Hydraulikkreis vorgesehen.

In weiterer Ausgestaltung der Erfindung sind als Funktionsüberwachungsmittel dem wenigstens einen Energieversorgungskreis wenigstens ein druckabhängig schaltbares Stellelement sowie dem Zwangsstellglied ein Positionssensor zugeordnet, die an die elektronische Steuereinheit angeschlossen sind. Somit ist die Überwachung der Funktionsfähigkeit des Bremssystem ermöglicht.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt schematisch eine Ausführungsform eines erfindungsgemäßen Kettenfahrzeugs,
- Fig. 2: in einem Blockschaltbild ein Antriebssystem für ein Kettenfahrzeug nach Fig. 1,
- Fig. 3: in einer Schemadarstellung eine Ansteuerung für eine Notlenkfunktion eines Bremssystems für das Kettenfahrzeug nach Fig. 1,
- Fig. 4: schematisch eine weitere Ausführungsform eines Bremssystems ähnlich Fig. 3,
- Fig. 5: schematisch eine weitere Ausführungsform eines Bremssystems ähnlich Fig. 4,
- Fig. 6: eine detaillierte Blockschaltdarstellung eines Teils des Bremssystems nach Fig. 4 und
- Fig. 7: eine detaillierte Blockschaltdarstellung eines Teils des Bremssystems nach Fig. 5.

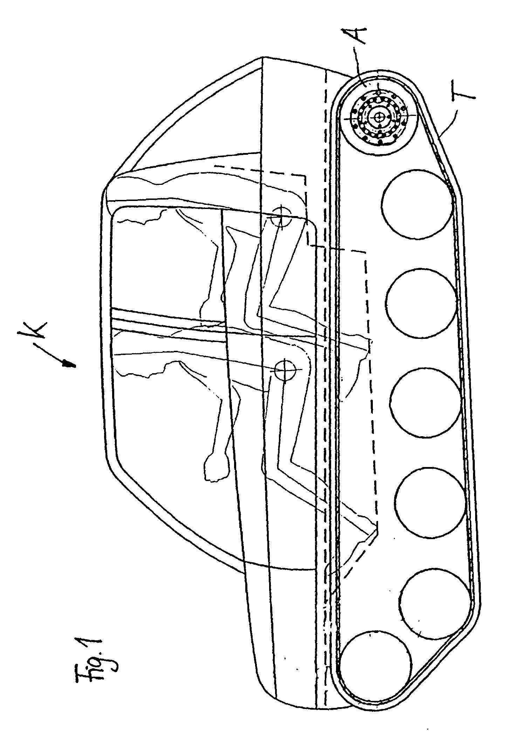

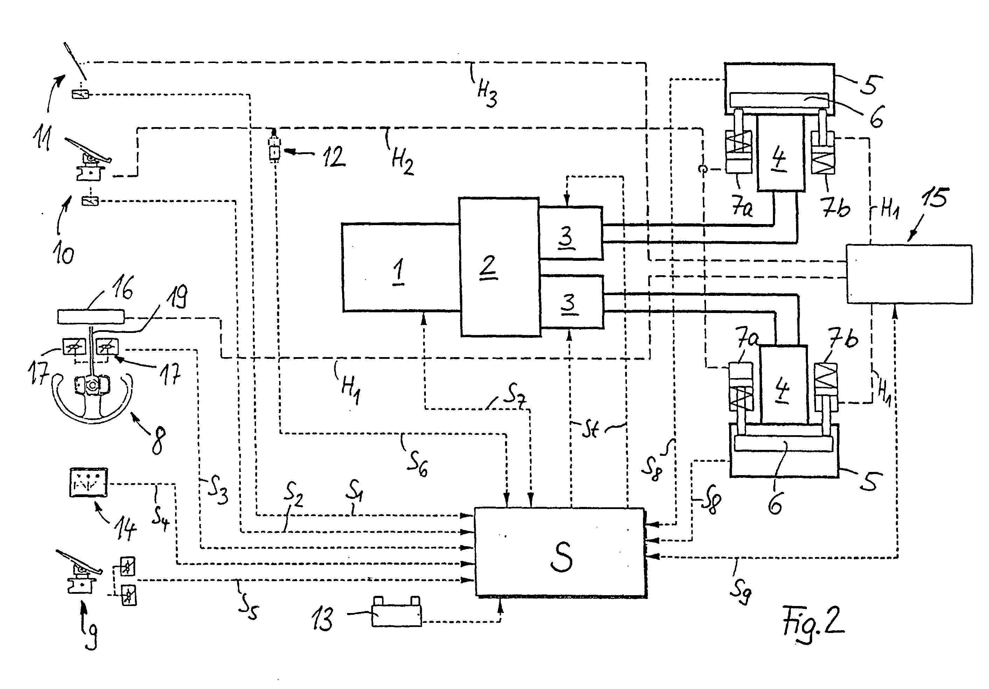

Ein Kettenfahrzeug K nach Fig. 1 ist auf zwei gegenüberliegenden Fahrzeugseiten mit jeweils einem Kettentrieb T versehen. Jeder Kettentrieb T weist eine umlaufende Kette oder Raupe auf, die durch ein Kettenrad A angetrieben ist. Die beiden Kettentriebe T sind jeweils Teil einer Fahrwerksseite. Neben dem Kettentrieb T weist jede Fahrwerksseite eine nachfolgend näher beschriebene Antriebshydraulik auf, die Teil eines Antriebssystems im Sinne der Erfindung ist und die jeweils auf das als Antriebsrad dienende Kettenrad A jeder Fahrwerksseite einwirkt. Die Antriebshydraulik für jede Fahrwerksseite weist jeweils einen Hydromotor 4 auf, der mittels eines Getriebes 5 das Kettenrad A des zugeordneten Kettentriebes T antreibt. Die Antriebshydraulik für jede Fahrwerksseite ist mit jeweils einer Pumpeinheit 3 in Form einer Hydropumpe versehen (Fig. 2). Die beiden Hydropumpen 3 sind mittels eines Verteilergetriebes 2 durch einen zentralen Verbrennungsmotor 1 angetrieben. Der Verbrennungsmotor 1 ist beim dargestellten Ausführungsbeispiel als Ottomotor ausgeführt. In gleicher Weise ist es möglich, einen Dieselmotor vorzusehen.

Sowohl die Fahrbewegungen des Kettenfahrzeugs K als auch Fahrtrichtungsänderungen werden durch eine elektronische Steuereinheit S erzeugt, die die entsprechenden Hydropumpen 3 der jeweiligen Antriebshydraulik über Steuerleitungen St ansteuert. Für eine Beschleunigung oder Verzögerung des Kettenfahrzeugs werden beide Hydropumpen 3 synchronisiert angesteuert, wodurch die beiden Hydromotoren 4 synchron die Antriebsdrehzahlen stufenlos reduzieren oder erhöhen. Als Sollwertgeber für eine entsprechende Beschleunigung, Konstanthaltung oder Verzögerung der Fahrzeuggeschwindigkeit ist ein Fahrpedal 9 vorgesehen, das mittels einer Signalleitung S₅ mit der elektronischen Steuereinheit S verbunden ist. Für starke Verzögerungen, d.h. Bremsvorgänge, die durch entsprechende Bremspedalansteuerung der Hydromotoren nicht realisierbar sind, wirkt ein Bremspedal 10 direkt auf einen hydraulischen Bremskreis H₂. Der hydraulische Bremskreis umfasst zwei Bremseinrichtungen 6, die jeweils einer Fahrzeugseite zugeordnet sind. Die Bremseinrichtungen 6 sind beim dargestellten Ausführungsbeispiel als Lamellenbremse ausgeführt und mittels jeweils eines Bremskolbens 7a ansteuerbar, die Teil des hydraulischen Bremskreises H₂ sind. Der hydraulische Bremskreis H₂ wird lediglich bei Überschreitung eines Druckgrenzwertes innerhalb des hydraulischen Bremskreises H₂ in Funktion gesetzt. Bei anderen Bremspedalbetätigungen, die einen Hydraulikdruck unter 30bar bewirken, wird der entsprechende Bremsdruck über einen Drucksensor 12 aufgenommen, der mittels einer Signalleitung S₆ mit der elektronischen Steuereinheit S in Verbindung steht. Diese Steuereinheit S steuert die entsprechenden Hydromotoren 4 entsprechend an, um die gewünschten Verzögerungen des Fahrzeugs zu erreichen.

Bei einer äußerst starken Verzögerung durch einen besonders starken Druck auf das Bremspedal 10, bei dem ein Schwellwert oder Druckgrenzwert des Systemdrucks innerhalb des hydraulischen Bremskreises H₂ überschritten wird, erfolgt die Bremsfunktion nicht mehr durch Ansteuerung der Hydromotoren 4 über die elektronische Steuereinheit S, sondern direkt über den Hydraulikkreis H₂ auf die Bremseinrichtungen 6. Der Grenzwert oder Schwellwert, bei dessen Überschreitung die Bremseinrichtungen 6 in Funktion treten, beträgt beim vorliegenden Ausführungsbeispiel 30bar. Jedem Kettenrad ist im Bereich des Getriebes 5 jeweils die als Bremseinrichtung dienende Lamellenbremse 6 zugeordnet, die über einen federbelastet lüftenden Bremskolben 7a betätigt wird. Die Federkraft der Rückstellfeder des Bremskolbens 7a auf jeder Fahrwerksseite ist derart ausgelegt, dass die Lamellenbremse 6 bis zu dem entsprechenden Schwellwert, vorliegend 30bar, gelüftet ist. Sobald ein entsprechender Bremsdruck in dem Hydraulikkreis H₂ diesen Schwellwert von 30bar übersteigt, wird das Lamellenpaket der Lamellenbremse 6 zusammengedrückt, wodurch die gewünschte Bremsfunktion auf jedes Kettenrad A und damit auf den jeweiligen Kettentrieb erzielbar ist. Neben der alternativen Zuschaltung der Lamellenbremse anstelle des jeweiligen Hydromotors 4 ist es auch möglich, über den Hydraulikkreis H₂ die jeweilige Lamellenbremse 6 ergänzend zur Wirkung des Hydromotors 4 einzusetzen. Durch die von der elektronischen Steuereinheit S und damit auch von einer Stromversorgung unabhängige Bremsfunktion oberhalb des vorgegebenen Schwellwertes ist es möglich, das Fahrzeug durch entsprechend starke Betätigung des Bremspedals auch bei Ausfall, Abschaltung oder Fehlfunktion der elektronischen Steuereinheit S zum Stillstand zu bringen.

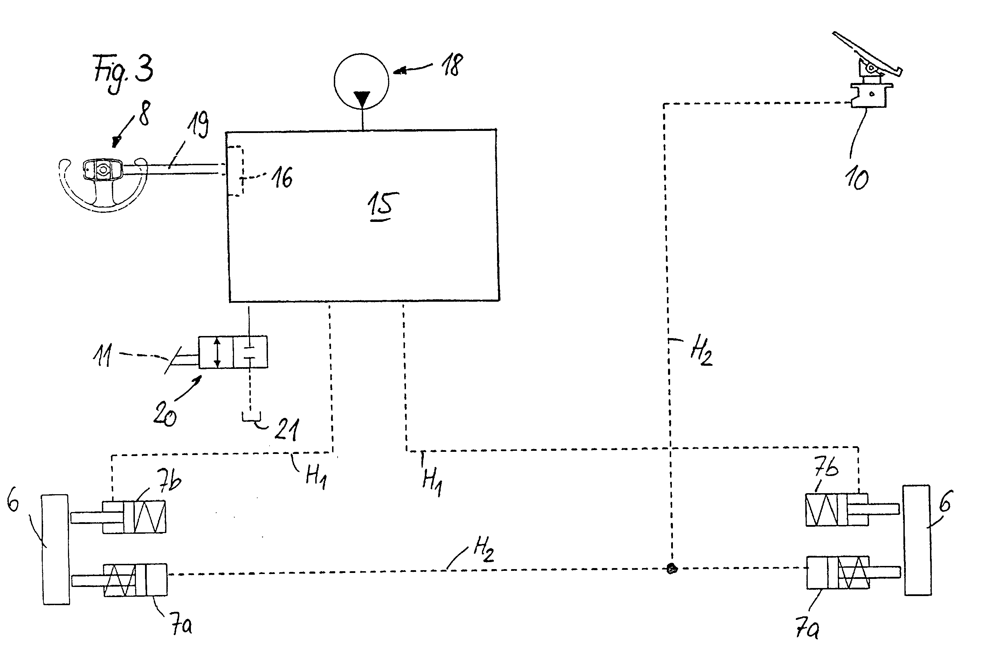

Die Bremskolben 7b sind ergänzend durch eine Feststellbremse 11, die vorliegend als Handbremse ausgeführt ist, betätigbar. Wie anhand der Fig. 3 erkennbar ist, ist hierzu einer Hydraulikleitung H₃, die mit den Bremszylindern 7b in Verbindung steht, ein als Steuerglied dienendes Stellventil 20 zugeordnet, das den Rücklauf zu einem Tank 21 für das entsprechende Hydrauliköl freigibt oder sperrt. Bei geöffneter Handbremse 11 ist die als Federspeicher dienende Druckfederanordnung jedes Bremszylinders 7b gelüftet, da dann die entsprechende Hydraulikleitung druckbeaufschlagt ist. Bei einem Ziehen, d.h. Feststellen der Handbremse 11 wird der Rücklauf zum Tank 21 durch entsprechende Ansteuerung des Stellventils 20 freigegeben, wodurch sich der Druck in der Hydraulikleitung H₃ unter einen definierten Druckgrenzwert, vorliegend unter einen Schwellwert von 15bar, reduziert. Dieser Schwellwert stellt die Schaltschwelle für die Bremskolben 7b dar, so dass die Druckkräfte des Federspeichers jedes Bremskolbens 7b eine entsprechende mechanische Bremsfunktion auf die entsprechende Lamellenbremse ausüben.

Die Bremskolben 7b sind unabhängig von den Bremskolben 7a vorgesehen und wirken jeweils auf die gleiche Lamellenbremse 6 wie der zugeordnete Bremskolben 7a. Jede Lamellenbremse 6 ist somit doppelt wirkend ausgeführt.

Die Betätigung der Bremskolben 7b hat noch eine weitere, nachfolgend beschriebene wesentliche Funktion. Für einen Lenkvorgang während des normalen Betriebs des Kettenfahrzeugs werden die beiden Hydropumpen 3 durch die elektronische Steuereinheit S unterschiedlich angesteuert. Durch die Reduzierung der Drehzahlen des einen Hydromotors 4 bzw. durch eine Erhöhung der Drehzahl jeweils eines Hydromotors 4 ergeben sich für die beiden Kettentriebe unterschiedliche Geschwindigkeiten, wodurch der gewünschte Lenkvorgang erzielt wird. Initiiert wird die entsprechende Fahrtrichtungsänderung durch die Lenkbewegung einer Steuerhandhabe in Form eines Lenkrades 8, dessen Drehbewegungen über Potentiometer 17 erfasst werden. Diese stehen über eine Signalleitung S₃ mit der elektronischen Steuereinheit S in Verbindung, so dass die Steuereinheit S jede Lenkbewegung der Steuerhandhabe 8 erfassen und in den gewünschten Steuerbefehl für die Hydropumpe 3 umsetzen kann. Um auch noch bei einem entsprechenden Stromausfall, einem Abschalten oder einer Fehlfunktion der Fahrzeugelektronik und damit insbesondere der elektronischen Steuereinheit S, oder aus anderen Ausfallgründen der Elektronik auch noch Lenkbewegungen zu gewährleisten, ist das Kettenfahrzeug mit einer hydraulischen Notlenkung 15 versehen. Hierzu ist ein weiterer Hydraulikkreis H₁ vorgesehen, der mittels der Bremskolben 7b auf die Lamellenbremsen 6 beider Fahrwerksseiten, d.h. beider Kettentriebe, wirkt. Um einen entsprechenden Ausfall der Elektronik zu erkennen, weist das Notlenkungssystem 15 ein elektrisch betätigtes Zwangsstellglied, vorliegend ein Magnetventil, auf, das im Normalbetrieb, d.h. während des Einsatzes der elektronischen Steuereinheit S, bestromt ist. Dieses Magnetventil ist in dem in Fig. 2 dargestellten Notlenkventil 16 integriert. Sobald das Magnetventil durch den entsprechenden Spannungsabfall bei Ausfall oder Abschalten der Fahrzeugelektronik stromlos geschaltet wird, wird das hydraulische Steuerglied - ebenfalls im Notlenkventil 16 integriert - des Hydraulikkreises H₁ aktiviert. Das hydraulische Steuerglied stellt ein Druckregelventil dar, das über eine mechanische Verbindung 19 durch entsprechende Lenkbewegungen des Lenkrades 8 angesteuert wird. Je nach Lenkbewegung wird mittels des Druckregelventils innerhalb des Notlenkventils 16 der Druck in dem einen Hydraulikkreis H₁ (Fig. 3) reduziert und/oder in dem anderen Hydraulikkreis H₁ erhöht oder konstant gehalten. Beim vorliegenden Ausführungsbeispiel ist der benötigte Systemdruck, um den jeweiligen Bremskolben 7b im gelüfteten Zustand gegen die Federkraft einer entsprechenden Druckfederanordnung zu halten, bei 15bar definiert. Dies ist der Druckgrenzwert oder Schwellwert, der die Schaltschwelle für die Lamellenbremse 6 auf jeder Fahrzeugseite darstellt. Sobald der Druck unter diesen Schwellwert abfällt, ergibt sich für die Lamellenbremse 6 eine Bremsfunktion aufgrund der Federkraft des nun wirkenden Federspeichers in Form einer Druckfederanordnung, die auf jeden Bremskolben 7b wirkt. Das Lenkrad 8 wird in einer Nulllage federzentriert gehalten, um eine Steuerung des Kettenfahrzeugs zu erleichtern.

Um zu gewährleisten, dass in den Hydraulikleitungen H₁ ein ausreichender Speisedruck von über 15bar, d.h. ein Speisedruck oberhalb des unteren Schwellwertes, zur Verfügung steht, ist wenigstens eine Speisepumpe 18 vorgesehen, die mechanisch mit einem durch die Fahrbewegung des Kettenfahrzeugs rotierenden Teil in Drehverbindung steht. Dadurch ist ein Mitschleppen der wenigstens einen Speisepumpe 18 beim Ausrollen des Kettenfahrzeugs gewährleistet, wobei die Pumpfunktion der wenigstens einen Speisepumpe 18 derart ausgelegt ist, dass durch diesen Mitschleppvorgang der gewünschte Speisedruck von mehr als 15bar zur Verfügung steht.

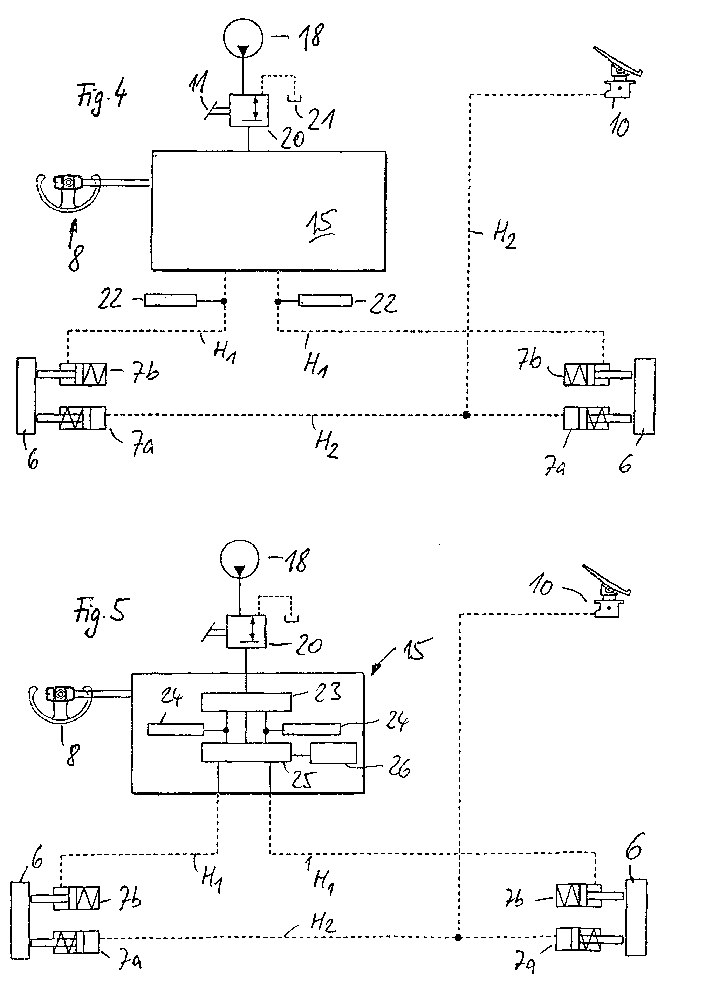

Der elektronischen Steuereinheit S sind zudem mehrere Signal- oder Steuerleitungen S₇ bis S₉ zugeordnet, die nachfolgend kurz beschrieben werden. Die Signal- und Steuerleitung S₇ ist mit einer Motorelektronik des Verbrennungsmotors 1 verbunden und ermöglicht die Drehzahlsteuerung des Verbrennungsmotors 1. Die Signalleitungen S₈ verbinden Drehzahlsensoren an den als Antriebsrädern dienenden Kettenrädern mit der elektronischen Steuereinheit S. Hierdurch wird eine Rückmeldung der durch die Hydromotoren 4 oder Bremskolben 7a, 7b tatsächlich erzielten Beschleunigungen, Verzögerungen oder Geschwindigkeiten und Fahrtrichtungen erzielt, die eine Auswertung mittels der elektronischen Steuereinheit S ermöglicht. Die Datenübertragungsleitung S₉ dient zur Funktionsüberwachung der Notlenkung 15, wie nachfolgend ausführlich anhand der Darstellungen gemäß den Fig. 4 bis 7 erläutert wird.

Die Ausführungsformen gemäß den Fig. 4 und 6 bzw. 5 und 7 entsprechen bis auf die nachfolgend beschriebenen Unterschiede der zuvor anhand der Fig. 1 bis 3 beschriebenen Ausführungsform. Wesentlicher Unterschied bei den Ausführungsformen nach den Fig. 4, 6 bzw. 5, 7 ist es, dass mittels dieser Ausführungsformen die zuvor anhand der Fig. 1 bis 3 ausführlich beschriebene Notlenkfunktion überwacht werden kann. Dadurch ist sichergestellt, dass von der elektronischen Steuereinheit S ein Ausfall der Notlenkfunktion während des normalen Fahrbetriebs des Kettenfahrzeugs sofort erkannt werden kann. Denn im normalen Betrieb wird das Kettenfahrzeug elektronisch gelenkt, so dass ein Fahrer des Kettenfahrzeugs einen eventuellen Ausfall der hydraulischen Notlenkung nicht bemerken kann. Um die funktionsfähige Rückfallebene für den Ausfall der elektronischen Steuerung herzustellen, sind die nachfolgend beschriebenen Ausführungsformen vorgesehen. In vorteilhafter Weise ist es ausreichend, eine entsprechende Funktionsüberprüfung durch die elektronische Steuerung vor jedem Neustart des Kettenfahrzeugs durchzuführen.

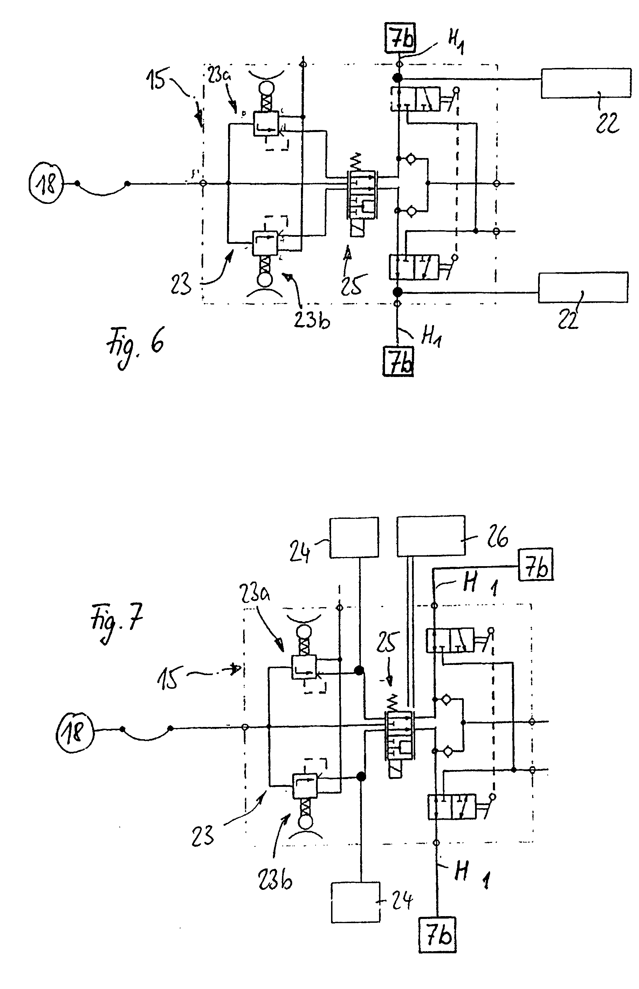

Beim Ausführungsbeispiel nach den Fig. 4 und 6 wie auch bei der Ausführungsform nach den Fig. 5 und 7 ist jeweils eine detaillierte Ausführung der Notlenkfunktion offenbart, die bis auf die Überwachungsmittel (nachfolgend näher beschrieben) vom Aufbau her für die Notlenkfunktion der Ausführungsform nach den Fig. 1 bis 3 einsetzbar ist. Hierzu sind der Speisepumpe 18 zwei Einheiten nachgeschaltet. Zum einen eine Lenkeinheit 23, die mechanisch mit Lenkrad 8 verbunden ist und zum anderen eine Freigabeeinheit 25, die ein Zwangsstellglied darstellt, das bei Ausfall der Elektronik automatisch in die Funktionsstellung überführt wird. Die Lenkeinheit 23 weist zwei Druckminderer 23a und 23b auf, die dem rechts- und linksseitigen Hydraulikkreis H₁ zur Ansteuerung der Bremskolben 7b der Lamellenbremsen 6 auf beiden Fahrzeugseiten zugeordnet sind. Als Freigabeeinheit oder Zwangsstellglied 25 ist ein 5/2-Wegeventil vorgesehen, das in der Darstellung nach den Fig. 6 und 7 in seinem stromlosen Zustand gezeigt ist. Im bestromten Zustand werden die Leitungen, d.h. der Hydraulikkreis H₁ gesperrt. In diesem bestromten Zustand erfolgt die Leitung von der Speisepumpe 18 direkt zu dem entsprechenden Hydromotoren 4. Jeder Leitung H₁ ist zudem ein 3/2-Wegeventil zugeordnet, die gemeinsam betätigbar sind und entweder die Leitung zu den Bremskolben 7b frei geben oder den Rücklauf aus diesen Leitungen definieren. Zur Funktionsüberwachung sind bei der Ausführungsform nach den Fig. 4 und 6 in die Leitungen H₁ nahe den Lamellenbremsen 6 zwei Drucksensoren 22 integriert, die den Leitungsdruck in den beiden Leitungen H₁ erfassen können.

In nicht näher dargestellter Weise ist zudem ein Betätigungsschalter im Bereich der Handbremse 10 vorgesehen, um den gelüfteten oder betätigten Zustand der Handbremse 10 erfassen zu können.

Die Druckregler oder Druckminderer 23a, 23b reduzieren beim Ausführungsbeispiel nach den Fig. 4, 6 und auch beim Ausführungsbeispiel nach den Fig. 5, 7 den Speisedruck auf ca. 14bar. Bei einer von einem Lenkpotentiometer erfassten Lenkbewegung nach links, steigt der Druck rechts und fällt links. Bei einer Lenkbewegung nach rechts sinkt der Druck rechts und steigt links. Dies kann durch die Drucksensoren 22 erfasst werden. Falls keine 14bar erreicht werden, ist einer der beiden Druckregler 23a, 23b defekt. So stellen sich insbesondere bei einem Federbruch bei einem der beiden Druckregler 23a, 23b Obar ein.

Bei bestromtem 5/2-Wegeventil 25 wird bei betätigter Handbremse der entsprechende Druck eingeregelt. Durch den Betätigungsschalter (zuvor beschrieben) ist die jeweilige Position der Handbremse erfassbar. Bei geöffneter Handbremse bei einer Pumpendrehzahl von vorzugsweise höher als 900 Umdrehungen pro Minute müssen über 16bar Speisedruck anstehen. Auch bei dem Defekt eines Drucksensors ist die Schaltfunktion des Zwangsstellgliedes 25, d.h. des 5/2-Wegeventiles, und der Druckregler 23a, 23b noch überwachbar.

Bei der Ausführungsform nach den Fig. 5 und 7 werden die beiden Druckregler 23a, 23b über zwei Druckschalter 24 überwacht. Die Lüftoder Betätigungsposition der Handbremse wird durch einen weiteren, nicht dargestellten Druckschalter überwacht. Zudem wird die Position des Zwangsstellgliedes in Form des 5/2-Wegeventils 25 über einen Positionsschalter 26 erfasst. Der Positionsschalter 26 übermittelt die stromlose oder bestromte Position des 5/2-Wegeventils 25 an die elektronische Steuereinheit. Durch die Druckschalter ist ein Druckabfall am jeweiligen Druckregler 23a, 23b erfassbar, so dass insbesondere auch ein Ausfall eines Druckreglers 23a, 23b erkennbar ist.

Alle beschriebenen Funktionsüberwachungsmittel sind mit der elektronischer Steuereinheit S gekoppelt, die insoweit bei einem Neustart nach Überprüfung der entsprechenden Funktionen eine Startfreigabe erteilen oder verweigern kann.

## Patentansprüche

1. Kettenfahrzeug mit einem Antriebssystem, das Fahr-, Brems-. Fahrtrichtungsänderungs- und Lenkfunktionen abhängig von entsprechenden Steuerbefehlen einer elektronischen Steuereinheit durchführt, wobei das Antriebssystem für Lenkfunktionen durch elektronische Umwandlung von Steuerbewegungen einer manuell bedienbaren Steuerhandhabe mittels der elektronischen Steuereinheit ansteuerbar ist, und wobei der Steuerhandhabe (8) ein mechanisch wirksames Koppelglied (19) zugeordnet ist, das bei einem Ausfall der elektronischen Steuereinheit (S) durch ein Zwangsstellglied (16) zuschaltbar ist und die Steuerverbindung der Steuerhandhabe (8) zu dem Antriebssystem und/oder dem separaten Bremssystem herstellt, **dadurch gekennzeichnet, dass** als Teil des Bremssystems jeder Fahrwerksseite eine von der Antriebshydraulik unabhängige Bremseinrichtung (6) zugeordnet ist, die über wenigstens einen separaten Energieversorgungskreis (H₁) gespeist ist, und dass die Steuerhandhabe (8) mechanisch mit wenigstens einem Steuerglied (16) des Energieversorgungskreises (H₁) verbunden ist, das abhängig von einem Ausfall der elektronischen Steuereinheit (S) mittels eines stromlos wirksamen Zwangsstellgliedes zuschaltbar ist und abhängig von entsprechenden Lenkbewegungen der Steuerhandhabe (8) die Bremseinrichtungen (6) beider Fahrwerksseiten ansteuert, und dass als Energieversorgungskreis ein Hydraulikkreis (H₁) vorgesehen ist, der durch eine Pumpeinrichtung (18) gespeist ist, die derart mechanisch mit wenigstens einer Fahrwerksseite in Verbindung steht, dass durch die Ausrollbewegung des Kettenfahrzeugs (K) die Pumpeinrichtung (18) mit einem ausreichenden Speisedruck versorgt wird.

2. Kettenfahrzeug nach Anspruch 1, **dadurch gekennzeichnet, dass** als Steuerglied ein Druckregelventil vorgesehen ist, das proportional zu den Lenkbewegungen der Steuerhandhabe (8) eine Ansteuerung beider Hydraulikkreise (H₁) und der zugeordneten Bremseinrichtungen (6) vornimmt.

3. Kettenfahrzeug nach Anspruch 1, **dadurch gekennzeichnet, dass** jede Bremseinrichtung eine mechanisch wirksame Bremse, insbesondere eine Lamellenbremse (6) aufweist, die auf ein Kettenrad (A) der jeweiligen Fahrwerksseite einwirkt.

4. Kettenfahrzeug nach Anspruch 3, **dadurch gekennzeichnet, dass** eine doppelt wirkende Lamellenbremse (6) vorgesehen ist.

5. Kettenfahrzeug nach Anspruch 1, **dadurch gekennzeichnet, dass** als Funktionsüberwachungsmittel wenigstens ein Drucksensor in den wenigstens einen Energieversorgungskreis der wenigstens einen Bremseinrichtung integriert ist, der an die elektronische Steuereinheit (S) angeschlossen ist.

6. Kettenfahrzeug nach Anspruch 1, **dadurch gekennzeichnet, dass** als Funktionsüberwachungsmittel dem wenigstens einen Energieversorgungskreis wenigstens ein druckabhängig schaltbares Stellelement sowie dem Zwangsstellglied ein Positionssensor zugeordnet sind, die an die elektronische Steuereinheit angeschlossen sind.

## Claims

1. Tracked vehicle with a drive system responsible for driving functions, braking functions, driving-direction-change functions and steering functions depending on the corresponding control functions of an electronic control unit, wherein the drive system for steering functions can be controlled by the electronic conversion of control movements of a manually operated control handle with the aid of the electronic control unit, and wherein the control handle (8) is connected with a mechanical coupling link (19), which can be connected with a forced actuator (16) if the electronic control unit (S) should fail, and can restore the control connection of the control handle (8) to the drive system and/or the separate braking system, **characterized by** the fact that as part of the braking system, each side of the running gear is connected to a braking device (6) independent of the drive hydraulics, which braking device receives power from at least one separate energy-supply circuit (H₁), and that the control handle (8) is mechanically connected to at least one control element (16) of the energy-supply circuit (H₁), which can be connected to a forced actuator, independent of a failure of the electronic control unit (S), that operates without electrical power and independent of corresponding steering movements of the control handle (8), controls the braking devices (6) of both sides of the running gear, and that a hydraulic circuit (H₁) is supplied as an energy-supply circuit, which is fed by a pump unit (18), which is mechanically connected to at least one side of a running gear so that the coasting motion of tracked vehicle (K) feeds the pumping device (18) with an adequate feed pressure.

2. Tracked vehicle according to Claim 1, **characterized by** the fact that a pressure-control valve has been provided as a control element, which controls both hydraulic circuits (H₁) and the connected braking devices (6), doing so proportionately to the steering movements of the control handle (8).

3. Tracked vehicle according to Claim 1, **characterized by** the fact that each braking device has a mechanically operating brake, in particular a multiple disk brake (6), which is depressed onto the chain-wheel (A) of the corresponding side of the running gear.

4. Tracked vehicle according to Claim 3, **characterized by** the fact that a double-action multiple disk brake (6) is provided.

5. Tracked vehicle according to Claim 1, **characterized by** the fact that at least one pressure sensor with at least one energy-supply circuit is integrated in that at least one braking device as a function monitoring device, which is connected to the electronic control unit (S).

6. Tracked vehicle according to Claim 1, **characterized by** the fact that at least a pressure-dependent switchable adjustment element is connected to that at least one energy-supply circuit and a position sensor is connected to the forced actuator as function monitoring devices, which are connected to the electronic control unit.

## Revendications

1. Véhicule à chenilles avec un système de propulsion, qui réalise des fonctions de marche, de freinage, de changement de sens de marche et de direction en fonction des instructions de commande correspondantes d'une unité de commande électronique, le système de propulsion pour les fonctions de direction étant activable via conversion électronique de mouvements de commande d'une manipulation de commande actionnable manuellement au moyen de l'unité de commande électronique, et un élément de couplage (19) actif mécaniquement, qui est connectable par un actionneur forcé (16) en cas de défaillance de l'unité de commande électronique (S) et qui établit le raccordement de commande de la manipulation de commande (8) au système de propulsion et/ou au système de freinage séparé, étant affecté à la manipulation de commande (8), **caractérisé par le fait qu'**un dispositif de freinage (6) indépendant de l'hydraulique de propulsion et qui est alimenté via au moins un circuit d'alimentation en énergie (H₁) séparé, est affecté à chaque côté du châssis en tant que partie du système de freinage, et **par le fait que** la manipulation de commande (8) est assemblée mécaniquement avec au moins un organe de commande (16) du circuit d'alimentation en énergie (H₁) qui est connectable en fonction d'une défaillance de l'unité de commande électronique (S) au moyen d'un actionneur forcé actif sans courant et active les dispositifs de freinage (6) des deux côtés du châssis en fonction des mouvements de direction correspondants de la manipulation de commande (8), et **par le fait qu'**un circuit hydraulique (H₁) est prévu en tant que circuit d'alimentation en énergie qui est alimenté par un dispositif de pompe (18) qui est en contact mécaniquement avec au moins un côté du châssis de telle manière que le dispositif de pompe (18) soit alimenté avec une pression d'alimentation suffisante par le mouvement de roulement du véhicule à chenilles (K).

2. Véhicule à chenilles selon la revendication 1, **caractérisé par le fait qu'**une valve de régulation de pression est prévue en tant qu'organe de commande et procède à une activation des deux circuits hydrauliques (H₁) et des dispositifs de freinage (6) affectés proportionnellement aux mouvements de direction de la manipulation de commande (8).

3. Véhicule à chenilles selon la revendication 1, **caractérisé par le fait que** chaque dispositif de freinage présente un frein actif mécaniquement, en particulier un frein à lamelles (6) qui agit sur une roue à chaîne (A) du côté correspondant du châssis.

4. Véhicule à chenilles selon la revendication 3, **caractérisé par le fait qu'**un frein à lamelles (6) à action double est prévu.

5. Véhicule à chenilles selon la revendication 1, **caractérisé par le fait qu'**au moins un capteur de pression est intégré en tant que moyen de contrôle du fonctionnement dans le circuit d'alimentation en énergie au nombre minimum d'un du dispositif de freinage au nombre minimum d'un qui est raccordé à l'unité de commande électronique (S).

6. Véhicule à chenilles selon la revendication 1, **caractérisé par le fait qu'**au moins un élément de commande à entraînement dépendant de la pression est affecté en tant que moyen de contrôle du fonctionnement au circuit d'alimentation en énergie au nombre minimum d'un ainsi qu'un capteur de position est affecté à l'actionneur forcé, ledit élément de commande et ledit capteur de position étant raccordés à l'unité de commande électronique (S).
